# FASCICULE DE BREVET EUROPEEN

(11) **EP 2 742 498 B1**
(45) Date de publication et mention de la délivrance du brevet: **30.05.2018**
(21) Numéro de dépôt: 12743499.1
(22) Date de dépôt: 03.07.2012
(51) Int. Cl.: G08G 1/0962, G01C 21/34, G06Q 30/00

(54) **PROCÉDÉ D'ASSISTANCE D'UN UTILISATEUR D'UN VÉHICULE AUTOMOBILE, SYSTÈME MULTIMÉDIA ET VÉHICULE AUTOMOBILE**
VERFAHREN ZUR UNTERSTÜTZUNG EINES BENUTZERS EINES MOTORFAHRZEUGS, MULTIMEDIASYSTEM UND MOTORFAHRZEUG
METHOD FOR ASSISTING A USER OF A MOTOR VEHICLE, MULTIMEDIA SYSTEM, AND MOTOR VEHICLE

(30) Priorité: 11.08.2011 FR 1157292
(43) Date de publication de la demande: 18.06.2014
(73) Titulaire: Renault S.A.S., 92100 Boulogne-Billancourt (FR)
(72) Inventeur: ALEXANDER, Jean-Philippe, 37520 La Riche (FR); CHAPUIS, Thomas, 92160 Antony (FR)
(86) Numéro de dépôt international: PCT/FR2012/051545
(87) Numéro de publication internationale: WO 2013/021109

(56) Documents cités:
- GB-A- 2 366 055
- US-A1- 2006 229 802
- US-A1- 2010 026 526
- US-B1- 6 401 029

## Description

### Domaine technique de l'invention

L'invention concerne le domaine de l'assistance d'un utilisateur d'un véhicule automobile.

L'invention a pour objet plus particulièrement un tel procédé d'assistance, dans lequel une acquisition de paramètres associés au contexte d'utilisation et de fonctionnement du véhicule automobile est mise en oeuvre. Elle concerne également un système multimédia embarqué à bord d'un véhicule automobile, ainsi qu'un véhicule automobile et un support informatique.

### État de la technique

Les systèmes multimédias actuels embarqués à bord de véhicules automobiles permettent d'accéder et de gérer une quantité de données aussi vaste que celles disponibles sur un ordinateur par exemple. La connexion de ces systèmes à internet rend l'accès aux données quasi illimitées.

Classiquement, pour qu'un système multimédia embarqué fournisse une information à l'utilisateur, celui-ci doit procéder à de nombreuses manipulations, par exemple par l'exercice d'une navigation consistant à rechercher l'information dans une arborescence ou une base de données plus ou moins complexe. Or cette ouverture à un nombre quasi sans limite d'informations pose le problème de la convivialité du système multimédia vis-à-vis de l'utilisateur pour faciliter la recherche d'informations et augmenter la sécurité dans un contexte de conduite du véhicule par l'utilisateur.

Il a déjà été imaginé de réaliser une acquisition de paramètres associés au contexte d'utilisation du véhicule pour ensuite les exploiter afin de gérer un système multimédia à bord d'un véhicule automobile.

Le document EP-B1-1699032 décrit une telle solution de gestion et d'assistance, dans laquelle les paramètres acquis liés au contexte d'utilisation du véhicule sont exploités pour hiérarchiser des informations à fournir à l'utilisateur et créer un ordre dans la transmission successives des différentes informations.

Le document US2011/0035144 décrit une solution dans laquelle les paramètres acquis liés au contexte d'utilisation du véhicule servent par contre à générer des caractéristiques liées au conducteur afin, in fine, de gérer, en fonction de ces caractéristiques de conducteur, la mise à jour des états d'affichage de boutons de fonctionnement affichés sur un affichage.

Le document US2006/0229802 décrit un procédé et un système de navigation pour véhicule utilisant des paramètres associés au contexte d'utilisation du véhicule pour proposer une liste de suggestions de destinations préparée lorsqu'une corrélation est faite entre des paramètres instantanés et une situation identique du passé.

De même, le document US6401029 décrit un procédé et un système de navigation pour véhicule utilisant des paramètres associés au contexte d'utilisation du véhicule qui sont adressés à une table de corrélation afin de suggérer au conducteur un événement, telle qu'une destination à partir de la destination actuelle du véhicule.

Ces solutions existantes se cantonnent donc à limiter ou ordonner des informations à fournir à l'utilisateur du véhicule selon des situations très spécifiques, et n'apportent pas de solution globale au sujet de la convivialité et de la sécurité d'un utilisateur d'un véhicule automobile souhaitant exploiter dans une large mesure des fonctionnalités et informations de type multimédia.

### Objet de l'invention

L'objet principal de l'invention est de proposer une solution d'assistance d'un utilisateur d'un véhicule automobile, qui permette de répondre conjointement aux problématiques de sécurité, de convivialité et de sécurité.

Un autre objet est de proposer une solution qui améliore la découverte d'informations accessibles par l'utilisateur grâce à un système multimédia et participe au divertissement de l'utilisateur.

Un premier aspect de l'invention concerne un procédé d'assistance d'un utilisateur d'un véhicule automobile, selon la revendication 1. Le procédé comprend les étapes suivantes :
- acquisition de paramètres associés au contexte d'utilisation du véhicule automobile,
- élaboration d'une liste de suggestions d'actions,
- sélection de suggestions d'actions parmi cette liste de suggestions d'actions en fonction du contexte d'utilisation du véhicule automobile,
- transmission de ces suggestions d'actions sélectionnées à l'utilisateur par une interface homme/machine.

L'étape d'acquisition comprend une mémorisation de paramètres associés au contexte d'utilisation du véhicule dans une mémoire électronique. Une mémorisation peut être réalisée pour chaque utilisateur identifié.

Les paramètres associés au contexte d'utilisation du véhicule automobile peuvent être choisis parmi tout ou partie de :
- identification de l'utilisateur,
- contrôle des itinéraires réalisés par l'utilisateur, des positions du véhicule et temps de stationnement du véhicule,
- contrôle des actions de l'usager sur un système multimédia embarqué,
- tranche horaire,
- jours ouvrés ou week-end,
- nombre d'occupants du véhicule,
- contrôle de la conduite,
- contrôle des informations du tableau de bord du véhicule,
- contrôle des événements du système multimédia embarqué.

L'étape d'élaboration d'une liste de suggestions d'actions peut comprendre les sous-étapes suivantes :
- génération d'au moins une suggestion d'action à partir des paramètres mémorisés,
- enregistrement dans une mémoire électronique contenant la liste de suggestions d'actions de la suggestion générée.

La génération d'une suggestion peut comprendre une définition d'un événement déclencheur et d'une action correspondante, associés à cette suggestion d'action. La génération d'une suggestion peut comprendre une définition d'un nom et/ou d'une réaction de l'interface homme/machine et/ou d'éléments graphiques, associés à cette suggestion d'action.

La sélection d'une suggestion d'action donnée parmi la liste de suggestions d'actions est par exemple activée en cas d'un contexte d'utilisation du véhicule correspondant à l'événement déclencheur associé à cette suggestion d'action.

La liste de suggestions d'actions peut comprendre des suggestions d'actions de catégorie « communication » et/ou de catégorie « navigation » et/ou de catégorie « multimédia » et/ou de catégorie « système ».

Les suggestions d'actions de la catégorie « communication » peuvent comprennent toutes ou partie des suggestions suivantes :
- écouter un message SMS dès qu'un nouveau SMS est reçu,
- rappeler l'appelant d'un appel en absence,
- afficher une tâche à l'échéance d'un rappel de cette tâche,
- ouvrir une fiche associée à un ami de l'utilisateur en cas de proximité géographique de cet ami par rapport au véhicule.

Les suggestions d'actions de la catégorie « navigation » peuvent comprendre toutes ou partie des suggestions suivantes :
- activer un mode « touristique » en cas de roulage dans une région inhabituelle,
- guider vers un lieu particulier en cas de proximité de ce lieu,
- afficher des lieux de repos et/ou de restauration en cas de durée de roulage supérieure à une valeur prédéfinie,
- afficher des variantes d'itinéraires en cas d'embouteillage.

Les suggestions d'actions de la catégorie « multimédia » peuvent comprendre toutes ou partie des suggestions suivantes :
- écouter une proposition d'écoute musicale en cas de similitude avec des habitudes de l'utilisateur et/ou en cas de proposition d'écoute par un occupant différent de l'utilisateur et/ou en cas de recommandation par un réseau social en liaison avec l'utilisateur et/ou en cas de connexion d'un élément nomade si au moins deux occupants sont présents,
- jouer à un jeu musical en cas de présence d'au moins trois occupants,
- écouter des épisodes non écoutés d'un podcast auquel l'utilisateur est abonné,
- écouter une station de radiodiffusion proposée en fonction des habitudes d'écoute de l'utilisateur et/ou de la localisation du véhicule.

Les suggestions d'actions de la catégorie « système » peuvent comprendre toutes ou partie des suggestions suivantes :
- découvrir un « widget » s'il correspond avec les intérêts renseignés de l'utilisateur et/ou en cas de similitude de widgets déjà téléchargés,
- renseigner des coordonnées personnelles téléphoniques et/ou email en cas de détection d'un téléphone et/ou d'une connexion internet,
- proposition d'aide ou d'explications à propos de fonctions ou de gestes présentant une fréquence d'utilisation ou de réalisation faible ou nulle.

Le procédé comprend une étape d'observation de l'usage que fait l'utilisateur de chacune des suggestions d'actions parmi la liste et une étape de retrait ou non de suggestions d'actions de la liste en fonction du résultat de l'observation. L'observation se fait par un compteur du nombre de lancement des suggestions d'actions parmi la liste.

Un deuxième aspect de l'invention concerne un système multimédia embarqué à bord d'un véhicule automobile pour assister l'utilisateur du véhicule automobile, comprenant une unité de gestion qui met en oeuvre un procédé tel que décrit ci-dessus, le système multimédia comprenant une interface homme/machine pour transmettre à l'utilisateur les suggestions d'action provenant de l'unité de gestion.

L'unité de gestion peut comprendre :
- un module d'élaboration de suggestions d'actions qui génère des suggestions d'actions probables et les enregistre dans une liste de suggestions d'actions contenue dans une mémoire électronique,
- et un module de sélection apte à sélectionner parmi la liste de suggestions d'actions au moins une suggestion d'action en cas d'un contexte d'utilisation du véhicule correspondant à l'événement déclencheur associé à cette suggestion d'action, et à la transmettre à l'interface homme/machine.

Un troisième aspect de l'invention concerne un véhicule automobile équipé d'un système multimédia tel que décrit ci-dessus.

Le véhicule peut comprendre des dispositifs aptes à générer des paramètres associés au contexte d'utilisation du véhicule automobile.

Un quatrième aspect de l'invention concerne un support informatique lisible par une unité de gestion et sur lequel est enregistré un programme informatique comprenant des moyens de codes de programme informatique de mise en oeuvre des étapes ou sous-étapes d'un procédé d'assistance tel que décrit ci-dessus.

### Description sommaire des dessins

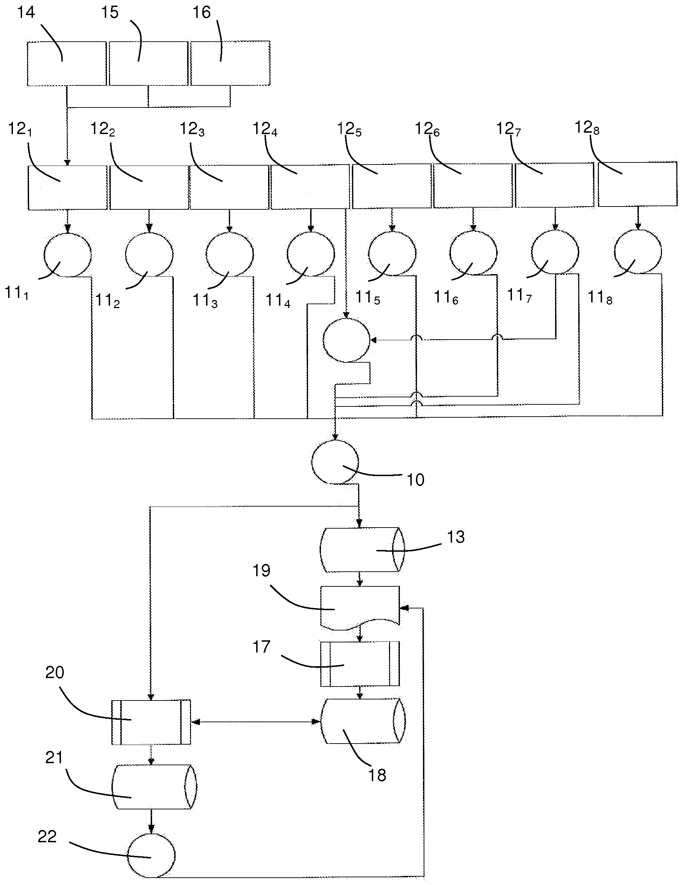

D'autres avantages et caractéristiques ressortiront plus clairement de la description qui va suivre de modes particuliers de réalisation de l'invention donnés à titre d'exemples non limitatifs et représentés sur la figure unique qui est un schéma logique de l'architecture logicielle et matérielle d'une unité de gestion équipant un système multimédia mettant en oeuvre un procédé d'assistance selon l'invention.

### Description de modes préférentiels de l'invention

Par la suite, le terme « utilisateur » correspond à toute personne pouvant interagir avec l'interface homme/machine. Il s'agit notamment soit d'un utilisateur conducteur soit d'un utilisateur passager.

Le concept de l'invention repose sur l'idée d'assister un utilisateur d'un véhicule automobile, qu'il soit conducteur ou passager, en mettant en oeuvre une transmission de suggestions d'actions à l'utilisateur par l'intermédiaire d'une interface homme/machine. Ces suggestions d'action sont élaborées puis transmises à l'interface par une unité de gestion à partir de paramètres associés au contexte d'utilisation et de fonctionnement du véhicule. L'interface peut également servir avantageusement à la fourniture d'autres informations à l'utilisateur.

Comme il le sera détaillé plus loin, l'unité de gestion réalise une acquisition permanente ou périodique des paramètres associés au contexte d'utilisation du véhicule automobile, liés à l'utilisateur ou au véhicule, par exemple à la dynamique du véhicule et/ou à l'environnement extérieur au véhicule et/ou aux actions de conduite effectuées par le conducteur du véhicule et/ou aux actions qui ne sont pas nécessairement corrélées à l'action de la conduite, mais qui sont effectuées par le conducteur lorsqu'il conduit, sur un ou plusieurs des dispositifs présents à bord du véhicule de manière permanente ou temporaire. Ainsi les paramètres peuvent émaner d'un nombre quelconque de dispositifs embarqués à bord du véhicule et qui sont destinés à toutes ces opérations.

En accomplissant la transmission de suggestions d'actions à l'attention de l'utilisateur où chacune de ces suggestions invite l'utilisateur à accomplir une action, l'unité de gestion permet de générer des raccourcis temporaires vers du contenu de bases de données ou vers des fonctionnalités, en fonction du contexte d'utilisation du véhicule en temps réel. L'utilisateur peut ainsi, en une seule action de validation de la suggestion qui lui est transmise par l'interface, lancer l'action à laquelle il est invité par la suggestion, ce qui lui évite d'avoir à réaliser de multiples actions de parcours ou de recherches dans l'arborescence de gestion du système pour aboutir au même résultat.

Ceci permet d'une part d'augmenter la sécurité d'utilisation en conduite en réduisant le nombre d'actions nécessaires à l'utilisateur conducteur, et d'autre part d'offrir des fonctionnalités supplémentaires, de faire découvrir du contenu et participer ainsi au divertissement de l'utilisateur passager.

À titre d'exemple, les suggestions d'actions peuvent être transmises à l'utilisateur sous la forme d'un affichage sur un écran dédié pouvant être destiné par ailleurs à la fourniture d'autres informations à l'utilisateur. L'affichage des suggestions d'actions peut prendre la forme d'une barre de suggestions qui constitue en pratique une barre de raccourcis contextualisés à un emplacement de l'écran d'affichage.

Le système multimédia incorporant l'unité de gestion peut d'autre part être commandé de toute manière possible, par un bouton de commande aménagé dans l'habitacle du véhicule, voire par un élément dissociable du véhicule tel qu'un téléphone portable ou un ordinateur portable.

Un exemple de structure logique de l'architecture logicielle et matérielle de l'unité de gestion est détaillée sur la figure annexée.

L'unité de gestion comprend un module d'acquisition 10 qui recueille des paramètres observés par différents modules de contrôle 11ᵢ associés à des dispositifs 12ᵢ liés et/ou influençant le contexte d'utilisation et de fonctionnement du véhicule, embarqués à bord du véhicule.

Par exemple, de tels dispositifs peuvent correspondre à :
- un réseau du véhicule 12₁,
- une interface homme/machine 12₂,
- des appareils amovibles 12₃,
- un module GPS 12₄,
- une horloge du véhicule 12₅,
- des capteurs de ceintures de sièges 12₆,
- une connexion internet 12₇,
- un téléphone 12₈.

Le dispositif de réseau du véhicule 12₁ peut lui-même être associé au tableau de bord 14, et/ou au système de gestion et surveillance des pédales 15, et/ou au système de surveillance de conduite 16, pour fournir des paramètres qui en proviennent jusqu'au module 10.

Ainsi une étape d'acquisition par le module 10 peut comprendre l'acquisition proprement dite de paramètres associés au contexte d'utilisation du véhicule par le module 10 générés par des dispositifs 12ᵢ par l'intermédiaire des modules 11ᵢ correspondants, puis la mémorisation des paramètres ainsi acquis sous la forme d'une pile de données dans une mémoire électronique 13.

Les paramètres associés au contexte d'utilisation du véhicule automobile peuvent être choisis par exemple parmi les suivants :
- identification de l'utilisateur,
- contrôle des itinéraires réalisés par l'utilisateur, des positions du véhicule et temps de stationnement du véhicule,
- contrôle des actions de l'usager sur un système multimédia embarqué,
- tranche horaire,
- jours ouvrés ou week-end,
- nombre d'occupants du véhicule,
- contrôle de la conduite,
- contrôle des informations du tableau de bord du véhicule,
- contrôle des événements du système multimédia embarqué.

Une mémorisation peut éventuellement être réalisée pour chaque utilisateur identifié par le système multimédia. Autrement dit, il peut y avoir autant de piles de données dans la mémoire que d'utilisateurs du système multimédia.

Le procédé d'assistance comprend ensuite une étape d'élaboration d'une liste de suggestions d'actions. Cette étape peut comprendre les sous-étapes suivantes :
- génération d'au moins une suggestion d'action à partir des paramètres mémorisés,
- enregistrement dans la liste de suggestions d'actions de la suggestion générée.

À cet effet, l'unité de gestion peut comprendre un module d'élaboration 17 de suggestions d'actions qui génère des suggestions d'actions probables et les enregistre dans une liste de suggestions d'actions contenue dans une mémoire électronique 18.

Notamment, la génération d'une suggestion réalisée par le module 17 peut comprendre une mémorisation ou attribution d'un événement déclencheur et d'une action correspondante, ces deux champs étant associés à cette suggestion d'action. Elle peut également comprendre une mémorisation ou attribution d'un nom et/ou d'une réaction de l'interface homme/machine et/ou d'éléments graphiques, associés à cette suggestion d'action.

Par exemple, lors de la réception d'un SMS, une suggestion peut être générée dont l'action serait la lecture du SMS par le système, l'élément graphique associé pourrait être la photo du contact ayant envoyé le SMS, photo récupérée depuis le carnet d'adresse de l'utilisateur.

La génération est réalisée par le module d'élaboration 17 à partir d'algorithmes prédéfinis 19. Ces algorithmes sont des méta-règles instanciées à partir des éléments de contexte mémorisés dans le module 13 et de l'observation de la récurrence dans le comportement de l'utilisateur ou de son véhicule (par exemple une méta-règle pour une suggestion de détour vers un lieu d'arrêt fréquent, est décrite par la proximité entre le trajet prévu du véhicule et un des lieux d'arrêt fréquent enregistrés dans le module 13.

Le procédé d'assistance comprend ensuite une étape de sélection de suggestions d'actions parmi cette liste de suggestions d'actions en fonction du contexte d'utilisation du véhicule automobile, c'est-à-dire finalement en fonction, en temps réel, des paramètres dont le module 10 fait l'acquisition.

À cet effet, l'unité de gestion comprend un module de sélection 20 apte à sélectionner parmi la liste de suggestions d'actions au moins une suggestion d'action en cas d'un contexte d'utilisation du véhicule correspondant à l'événement déclencheur associé à cette suggestion d'action.

Le procédé d'assistance comprend ensuite une étape de transmission des suggestions d'actions ainsi sélectionnées par le module 20 à l'utilisateur, par l'intermédiaire d'une interface homme/machine 21. Autrement dit, le module de sélection 20 est apte à transmettre chaque suggestion d'action sélectionnée depuis la liste, à l'interface homme/machine 21, pour en réaliser son affichage par exemple.

L'unité de gestion peut également comprendre un module de contrôle 22 ou surveillance apte à réaliser une étape d'observation de l'usage que fait l'utilisateur de chacune des suggestions d'actions proposées à l'utilisateur parmi la liste et met en oeuvre une étape de retrait ou non de suggestions d'actions de la liste en fonction du résultat de l'observation. L'observation accomplie par le module 22 peut se faire par un compteur du nombre de choix des suggestions d'actions par un utilisateur. Ainsi en fonction du nombre de lancement de chacune des suggestions, il peut être analysé par le module 22 s'il est pertinent de la conserver dans la liste pour une proposition ultérieure.

Il ressort donc d'après ce qui précède que le système multimédia embarqué à bord d'un véhicule automobile pour assister l'utilisateur du véhicule automobile, comprenant à cet effet l'unité de gestion, comprend en outre l'interface homme/machine 21 pour transmettre à l'utilisateur les suggestions d'action provenant de l'unité de gestion.

L'unité de gestion pourra comprendre tous les moyens logiciels et matériels nécessaires à la mise en oeuvre d'un procédé d'assistance tel que décrit ci-dessus. Notamment l'invention concerne tout support informatique lisible par l'unité de gestion et sur lequel est enregistré un programme informatique comprenant des moyens de codes de programme informatique de mise en oeuvre des étapes et sous-étapes d'un procédé d'assistance tel que décrit ci-dessus.

Comme il ressort des explications détaillées ci-dessous, la liste de suggestions d'actions comprend des suggestions d'actions de catégorie « communication » et/ou de catégorie « navigation » et/ou de catégorie « multimédia » et/ou de catégorie « système ».

Les suggestions d'actions de la catégorie « communication » peuvent comprendre toute ou partie des suggestions suivantes :
- écouter un message SMS dès qu'un nouveau SMS est reçu,
- rappeler l'appelant d'un appel en absence,
- afficher une tâche à l'échéance d'un rappel de cette tâche,
- ouvrir une fiche associée à un ami de l'utilisateur en cas de proximité géographique de cet ami par rapport au véhicule.

Les suggestions d'actions de la catégorie « navigation » peuvent comprendre toute ou partie des suggestions suivantes :
- activer un mode « touristique » en cas de roulage dans une région inhabituelle,
- guider vers un lieu particulier en cas de proximité de ce lieu,_
- afficher des lieux de repos et/ou de restauration en cas de durée de roulage supérieure à une valeur prédéfinie,
- afficher des variantes d'itinéraires en cas d'embouteillage.

Les suggestions d'actions de la catégorie « multimédia » peuvent comprendre toutes ou partie des suggestions suivantes :
- écouter une proposition d'écoute musicale en cas de similitude avec des habitudes de l'utilisateur et/ou en cas de proposition d'écoute par un occupant différent de l'utilisateur et/ou en cas de recommandation par un réseau social en liaison avec l'utilisateur et/ou en cas de connexion d'un élément nomade si au moins deux occupants sont présents,
- jouer à un jeu musical en cas de présence d'au moins trois occupants,
- écouter des épisodes non écoutés d'un podcast auquel l'utilisateur est abonné,
- écouter une station de radiodiffusion proposée en fonction des habitudes d'écoute de l'utilisateur et/ou à la localisation du véhicule.

Les suggestions d'actions de la catégorie « système » peuvent comprendre toute ou partie des suggestions suivantes :
- découvrir un « widget » s'il correspond avec les intérêts renseignés de l'utilisateur et/ou en cas de similitude de widgets déjà téléchargés,
- renseigner des coordonnées personnelles téléphoniques et/ou email en cas de détection d'un téléphone et/ou d'une connexion internet,
- proposition d'aide ou d'explications à propos de fonctions ou de gestes présentant une fréquence d'utilisation ou de réalisation faible ou nulle.

Ci-dessous, il est présenté quatre tableaux détaillant, par catégorie, les différentes suggestions d'actions envisageables listées ci-dessus, précisant pour chacune d'elle le nom de la suggestion, l'événement déclencheur associé, l'action correspondante associée, et enfin la réaction de l'interface homme/machine en vue de réaliser l'action.

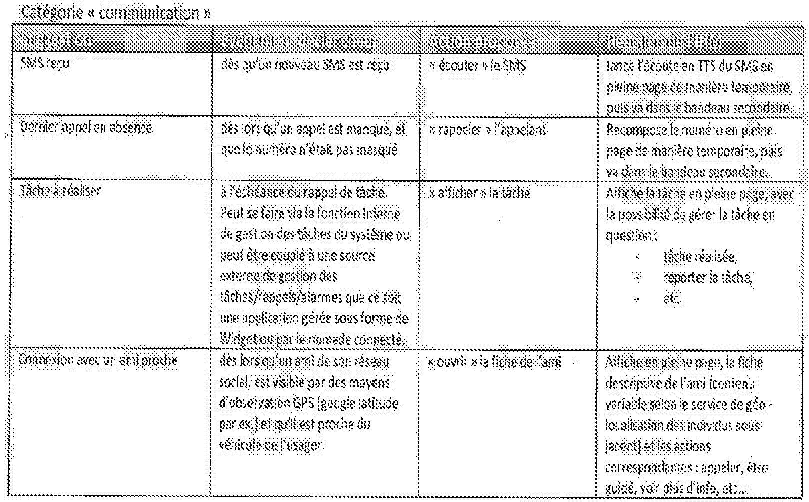

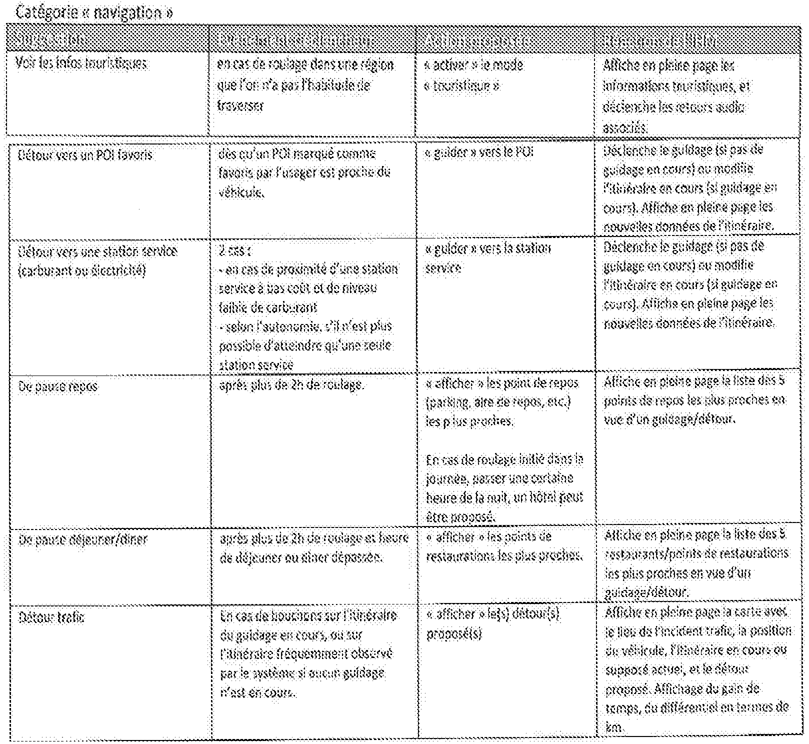

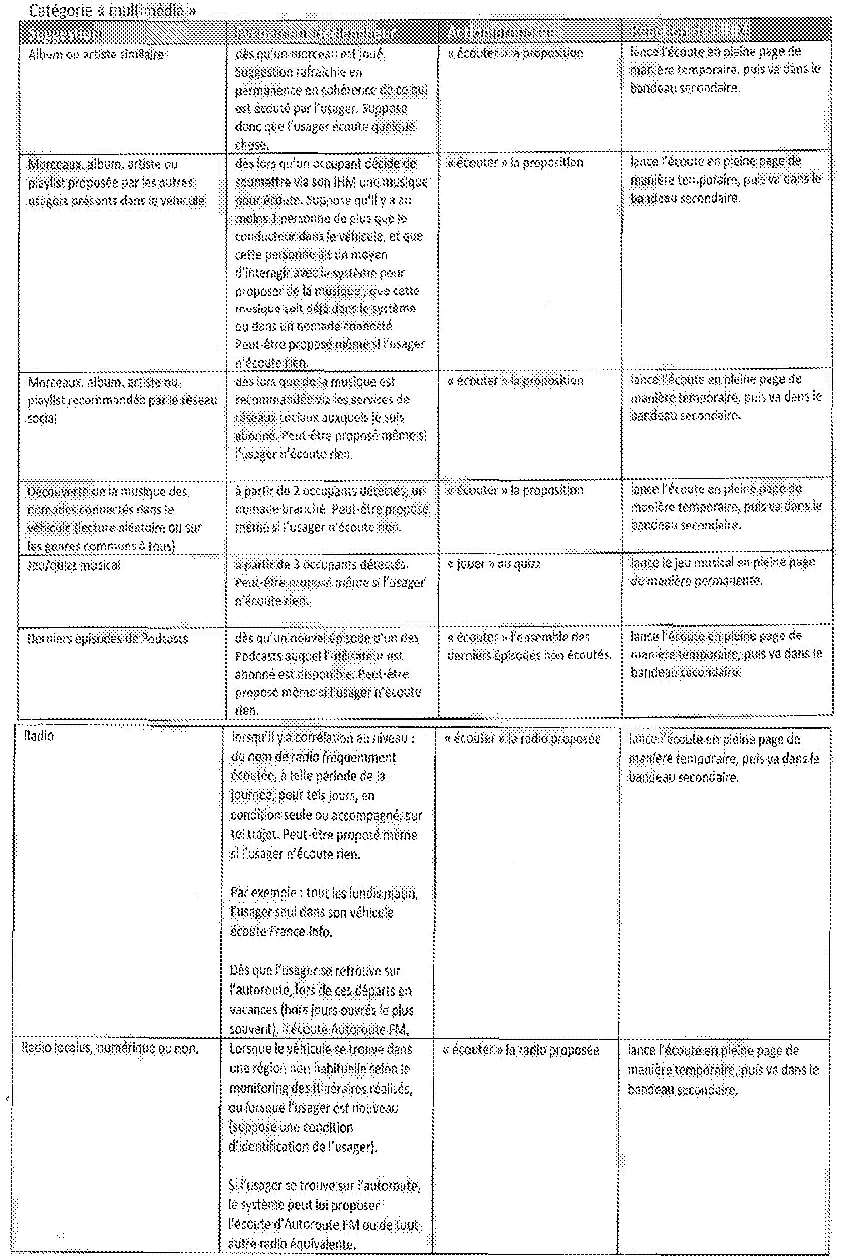

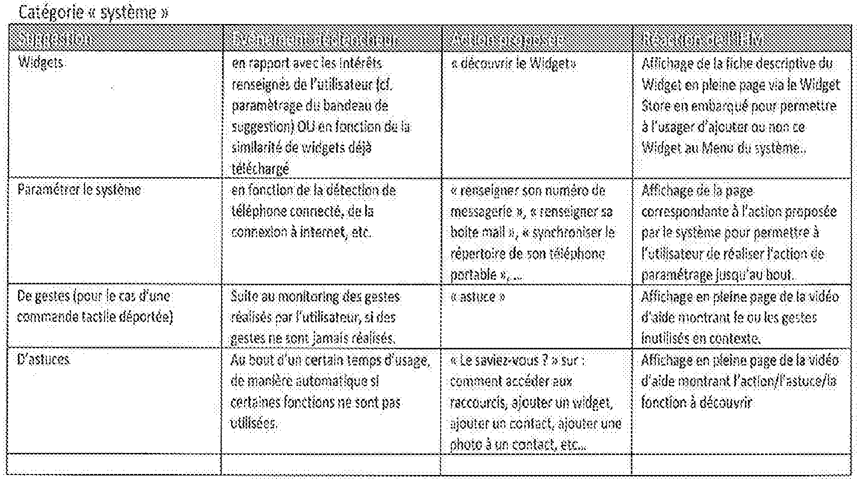

## Revendications

1. Procédé d'assistance d'un utilisateur d'un véhicule automobile, comprenant les étapes suivantes :
- acquisition de paramètres associés au contexte d'utilisation du véhicule automobile,
- élaboration d'une liste de suggestions d'actions,
- mémorisation de paramètres associés au contexte d'utilisation du véhicule dans une mémoire électronique (13),
- sélection de suggestions d'actions parmi cette liste de suggestions d'actions en fonction du contexte d'utilisation du véhicule automobile,
- transmission de ces suggestions d'actions sélectionnées à l'utilisateur par une interface homme/machine (21),
- observation de l'usage que fait l'utilisateur de chacune des suggestions d'actions parmi la liste et,
- retrait ou non de suggestions d'actions de la liste en fonction du résultat de l'observation, l'observation se faisant par un compteur du nombre de lancement des suggestions d'actions parmi la liste.

2. Procédé selon la revendication 1, **caractérisé en ce qu'**une mémorisation est réalisée pour chaque utilisateur identifié.

3. Procédé selon l'une des revendications 1 à 2, **caractérisé en ce que** les paramètres associés au contexte d'utilisation du véhicule automobile sont choisis parmi tout ou partie de :
- identification de l'utilisateur,
- contrôle des itinéraires réalisés par l'utilisateur, des positions du véhicule et temps de stationnement du véhicule,
- contrôle des actions de l'usager sur un système multimédia embarqué,
- tranche horaire,
- jours ouvrés ou week-end,
- nombre d'occupants du véhicule,
- contrôle de la conduite,
- contrôle des informations du tableau de bord du véhicule,
- contrôle des événements du système multimédia embarqué.

4. Procédé selon l'une des revendications 2 à 3, **caractérisé en ce que** l'étape d'élaboration d'une liste de suggestions d'actions comprend les sous-étapes suivantes :
- génération d'au moins une suggestion d'action à partir des paramètres mémorisés,
- enregistrement dans une mémoire électronique (18) contenant la liste de suggestions d'actions de la suggestion générée.

5. Procédé selon la revendication 4, **caractérisé en ce que** la génération d'une suggestion comprend une définition d'un événement déclencheur et d'une action correspondante, associés à cette suggestion d'action.

6. Procédé selon la revendication 5, **caractérisé en ce que** la génération d'une suggestion comprend une définition d'un nom et/ou d'une réaction de l'interface homme/machine et/ou d'éléments graphiques, associés à cette suggestion d'action.

7. Procédé selon l'une des revendications 5 et 6, **caractérisé en ce que** la sélection d'une suggestion d'action donnée parmi la liste de suggestions d'actions est activée en cas d'un contexte d'utilisation du véhicule correspondant à l'événement déclencheur associé à cette suggestion d'action.

8. Procédé selon l'une des revendications 1 à 7, **caractérisé en ce que** la liste de suggestions d'actions comprend des suggestions d'actions de catégorie « communication » et/ou de catégorie « navigation » et/ou de catégorie « multimédia » et/ou de catégorie « système ».

9. Procédé selon la revendication 8, **caractérisé en ce que** les suggestions d'actions de la catégorie « communication » comprennent toutes ou partie des suggestions suivantes :
- écouter un message SMS dès qu'un nouveau SMS est reçu,
- rappeler l'appelant d'un appel en absence,
- afficher une tâche à l'échéance d'un rappel de cette tâche,
- ouvrir une fiche associée à un ami de l'utilisateur en cas de proximité géographique de cet ami par rapport au véhicule.

10. Procédé selon l'une des revendications 8 et 9, **caractérisé en ce que** les suggestions d'actions de la catégorie « navigation » comprennent toutes ou partie des suggestions suivantes :
- activer un mode « touristique » en cas de roulage dans une région inhabituelle,
- guider vers un lieu particulier en cas de proximité de ce lieu,
- afficher des lieux de repos et/ou de restauration en cas de durée de roulage supérieure à une valeur prédéfinie,
- afficher des variantes d'itinéraires en cas d'embouteillage.

11. Procédé selon l'une des revendications 8 à 10, **caractérisé en ce que** les suggestions d'actions de la catégorie « multimédia » comprennent toutes ou partie des suggestions suivantes :
- écouter une proposition d'écoute musicale en cas de similitude avec des habitudes de l'utilisateur et/ou en cas de proposition d'écoute par un occupant différent de l'utilisateur et/ou en cas de recommandation par un réseau social en liaison avec l'utilisateur et/ou en cas de connexion d'un élément nomade si au moins deux occupants sont présents,
- jouer à un jeu musical en cas de présence d'au moins trois occupants,
- écouter des épisodes non écoutés d'un podcast auquel l'utilisateur est abonné,
- écouter une station de radiodiffusion proposée en fonction des habitudes d'écoute de l'utilisateur et/ou de la localisation du véhicule.

12. Procédé selon l'une des revendications 8 à 11, **caractérisé en ce que** les suggestions d'actions de la catégorie « système » comprennent toutes ou partie des suggestions suivantes :
- découvrir un « widget » s'il correspond avec les intérêts renseignés de l'utilisateur et/ou en cas de similitude de widgets déjà téléchargés,
- renseigner des coordonnées personnelles téléphoniques et/ou email en cas de détection d'un téléphone et/ou d'une connexion internet,
- proposition d'aide ou d'explications à propos de fonctions ou de gestes présentant une fréquence d'utilisation ou de réalisation faible ou nulle.

13. Système multimédia embarqué à bord d'un véhicule automobile pour assister l'utilisateur du véhicule automobile, **caractérisé en ce qu'**il comprend une unité de gestion qui met en oeuvre un procédé selon l'une des revendications 1 à 12, le système multimédia comprenant une interface homme/machine (21) pour transmettre à l'utilisateur les suggestions d'action provenant de l'unité de gestion.

14. Système multimédia selon la revendication 13, **caractérisé en ce que** l'unité de gestion comprend :
- un module d'élaboration (17) de suggestions d'actions qui génère des suggestions d'actions probables et les enregistre dans une liste de suggestions d'actions contenue dans une mémoire électronique (18),
- et un module de sélection (20) apte à sélectionner parmi la liste de suggestions d'actions au moins une suggestion d'action en cas d'un contexte d'utilisation du véhicule correspondant à l'événement déclencheur associé à cette suggestion d'action, et à la transmettre à l'interface homme/machine.

15. Véhicule automobile équipé d'un système multimédia selon l'une des revendications 13 et 14.

16. Véhicule automobile selon la revendication 15, **caractérisé en ce qu'**il comprend des dispositifs (12ᵢ) aptes à générer des paramètres associés au contexte d'utilisation du véhicule automobile.

17. Support informatique lisible par une unité de gestion et sur lequel est enregistré un programme informatique comprenant des moyens de codes de programme informatique de mise en oeuvre des étapes ou sous-étapes d'un procédé d'assistance selon l'une des revendications 1 à 12.

## Patentansprüche

1. Verfahren zur Unterstützung eines Benutzers eines Kraftfahrzeugs, welches die folgenden Schritte umfasst:
- Erfassung von Parametern, die dem Verwendungskontext des Kraftfahrzeugs zugeordnet sind,
- Erstellung einer Liste von Aktionsvorschlägen,
- Speicherung von Parametern, die dem Verwendungskontext des Kraftfahrzeugs zugeordnet sind, in einem elektronischen Speicher (13),
- Auswahl von Aktionsvorschlägen aus dieser Liste von Aktionsvorschlägen in Abhängigkeit von dem Verwendungskontext des Kraftfahrzeugs,
- Übertragung dieser ausgewählten Aktionsvorschläge zum Benutzer über eine Mensch-Maschine-Schnittstelle (21),
- Beobachtung des Gebrauchs, den der Benutzer von jedem der Aktionsvorschläge in der Liste macht, und
- Streichung von Aktionsvorschlägen aus der Liste oder nicht in Abhängigkeit vom Ergebnis der Beobachtung, wobei die Beobachtung durch einen Zähler der Anzahl der Inanspruchnahmen der Aktionsvorschläge in der Liste erfolgt.

2. Verfahren nach Anspruch 1, **dadurch gekennzeichnet, dass** eine Speicherung für jeden identifizierten Benutzer durchgeführt wird.

3. Verfahren nach einem der Ansprüche 1 bis 2, **dadurch gekennzeichnet, dass** die Parameter, die dem Verwendungskontext des Kraftfahrzeugs zugeordnet sind, aus der Gesamtheit oder einem Teil von Folgendem gewählt werden:
- Identifikation des Benutzers,
- Kontrolle der vom Benutzer zurückgelegten Fahrstrecken, der Positionen des Fahrzeugs und Parkzeiten des Fahrzeugs,
- Kontrolle der Aktionen des Nutzers an einem bordeigenen Multimediasystem,
- Tageszeit,
- Werktage oder Wochenende,
- Anzahl der Insassen des Fahrzeugs,
- Kontrolle der Fahrweise,
- Kontrolle der Informationen des Armaturenbretts des Fahrzeugs,
- Kontrolle der Ereignisse des bordeigenen Multimediasystems.

4. Verfahren nach einem der Ansprüche 2 bis 3, **dadurch gekennzeichnet, dass** der Schritt der Erstellung einer Liste von Aktionsvorschlägen die folgenden Teilschritte umfasst:
- Erzeugung wenigstens eines Aktionsvorschlags ausgehend von den gespeicherten Parametern,
- Aufzeichnung des erzeugten Vorschlags in einem elektronischen Speicher (18), der die Liste von Aktionsvorschlägen enthält.

5. Verfahren nach Anspruch 4, **dadurch gekennzeichnet, dass** die Erzeugung eines Vorschlags eine Definition eines auslösenden Ereignisses und einer entsprechenden Aktion, die diesem Aktionsvorschlag zugeordnet sind, umfasst.

6. Verfahren nach Anspruch 5, **dadurch gekennzeichnet, dass** die Erzeugung eines Vorschlags eine Definition eines Namens und/oder einer Reaktion der Mensch-Maschine-Schnittstelle und/oder von graphischen Elementen, die diesem Aktionsvorschlag zugeordnet sind, umfasst.

7. Verfahren nach einem der Ansprüche 5 oder 6, **dadurch gekennzeichnet, dass** die Auswahl eines gegebenen Aktionsvorschlags aus der Liste von Aktionsvorschlägen im Falle eines Verwendungskontexts des Fahrzeugs aktiviert ist, der dem auslösenden Ereignis entspricht, das diesem Aktionsvorschlag zugeordnet ist.

8. Verfahren nach einem der Ansprüche 1 bis 7, **dadurch gekennzeichnet, dass** die Liste von Aktionsvorschlägen Aktionsvorschläge der Kategorie "Kommunikation" und/oder der Kategorie "Navigation" und/oder der Kategorie "Multimedia" und/oder der Kategorie "System" umfasst.

9. Verfahren nach Anspruch 8, **dadurch gekennzeichnet, dass** die Aktionsvorschläge der Kategorie "Kommunikation" alle oder einen Teil der folgenden Vorschläge umfassen:
- eine SMS-Nachricht anhören, nachdem eine neue SMS empfangen wurde,
- den Anrufer eines verpassten Anrufs zurückrufen,
- eine Aufgabe bei Fälligkeit durch eine Erinnerung an diese Aufgabe anzeigen,
- eine Datei, die einem Freund des Benutzers zugeordnet ist, im Falle einer geographischen Nähe dieses Freundes in Bezug auf das Fahrzeug öffnen.

10. Verfahren nach einem der Ansprüche 8 und 9, **dadurch gekennzeichnet, dass** die Aktionsvorschläge der Kategorie "Navigation" alle oder einen Teil der folgenden Vorschläge umfassen:
- Aktivieren eines Modus "Touristik" im Falle einer Fahrt in einer ungewohnten Region,
- Führen zu einem speziellen Ort im Falle einer Nähe zu diesem Ort,
- Anzeige der Ruheorte und/oder Restaurants im Falle einer Fahrtdauer, die länger als ein vorgegebener Wert ist,
- Anzeigen der Varianten von Fahrtrouten im Falle eines Staus.

11. Verfahren nach einem der Ansprüche 8 bis 10, **dadurch gekennzeichnet, dass** die Aktionsvorschläge der Kategorie "Multimedia" alle oder einen Teil der folgenden Vorschläge umfassen:
- Anhören eines musikalischen Hörverschlags im Falle einer Ähnlichkeit mit Gewohnheiten des Benutzers und/oder im Falle eines Hörverschlags durch einen anderen Insassen als den Benutzer und/oder im Falle einer Empfehlung durch ein soziales Netzwerk, das mit dem Benutzer in Verbindung steht, und/oder im Falle einer Verbindung eines mobilen Elements, falls wenigstens zwei Insassen anwesend sind,
- Spielen eines Musikspiels im Falle der Anwesenheit von wenigstens drei Insassen,
- Anhören der noch nicht gehörten Episoden eines Podcasts, den der Benutzer abonniert hat,
- Hören einer Rundfunkstation, die in Abhängigkeit von den Hörgewohnheiten des Benutzers und/oder vom Standort des Fahrzeugs vorgeschlagen wird.

12. Verfahren nach einem der Ansprüche 8 bis 11, **dadurch gekennzeichnet, dass** die Aktionsvorschläge der Kategorie "System" alle oder einen Teil der folgenden Vorschläge umfassen:
- Entdecken eines "Widgets", falls es den mitgeteilten Interessen des Benutzers entspricht, und/oder im Falle einer Ähnlichkeit mit bereits heruntergeladenen Widgets,
- Mitteilen von telefonischen persönlichen Koordinaten und/oder E-Mail im Falle der Erkennung eines Telefons und/oder einer Internetverbindung,
- Angebot von Hilfe oder von Erläuterungen zu Funktionen oder Gesten mit einer Häufigkeit der Verwendung oder Ausführung, die niedrig oder gleich null ist.

13. Bordeigenes Multimediasystem eines Kraftfahrzeugs zur Unterstützung des Benutzers des Kraftfahrzeugs, **dadurch gekennzeichnet, dass** es eine Managementeinheit umfasst, welche ein Verfahren nach einem der Ansprüche 1 bis 12 durchführt, wobei das Multimediasystem eine Mensch-Maschine-Schnittstelle (21) zum Übertragen der von der Managementeinheit stammenden Aktionsvorschläge zum Benutzer umfasst.

14. Multimediasystem nach Anspruch 13, **dadurch gekennzeichnet, dass** die Managementeinheit umfasst:
- ein Modul zur Erstellung (17) von Aktionsvorschlägen, welches Vorschläge von wahrscheinlichen Aktionen erzeugt und sie in einer Liste von Aktionsvorschlägen registriert, die in einem elektronischen Speicher (18) enthalten ist,
- und ein Auswahlmodul (20), das in der Lage ist, aus der Liste von Aktionsvorschlägen wenigstens einen Aktionsvorschlag im Falle eines Verwendungskontexts des Fahrzeugs, der dem diesem Aktionsvorschlag zugeordneten auslösenden Ereignis entspricht, auszuwählen und ihn zu der Mensch-Maschine-Schnittstelle zu übertragen.

15. Kraftfahrzeug, das mit einem Multimediasystem nach einem der Ansprüche 13 und 14 ausgerüstet ist.

16. Kraftfahrzeug nach Anspruch 15, **dadurch gekennzeichnet, dass** es Vorrichtungen (12ᵢ) umfasst, die in der Lage sind, Parameter zu erzeugen, die dem Verwendungskontext des Kraftfahrzeugs zugeordnet sind.

17. Datenträger, der von einer Managementeinheit gelesen werden kann und auf dem ein Computerprogramm aufgezeichnet ist, das Computerprogramm-Codemittel zur Durchführung der Schritte oder Teilschritte eines Verfahrens zur Unterstützung nach einem der Ansprüche 1 bis 12 umfasst.

## Claims

1. Method of assisting a user of a motor vehicle, comprising the following steps:
- acquiring parameters associated with the context in which the motor vehicle is being used,
- compiling a list of suggested actions,
- storing parameters associated with the context in which the motor vehicle is being used in an electronic storage device (13),
- selecting suggested actions from among this list of suggested actions in accordance with the context in which the motor vehicle is being used,
- transmitting these selected suggested actions to the user via a human-machine interface (21),
- observing the use made by the user of each of the suggested actions on the list, and
- withdrawing suggested actions from the list or retaining them thereon according to the result of the observation, the observation being carried out by means of a counter of the number of launches of suggested actions from the list.

2. Method according to Claim 1, **characterized in that** a storing operation is carried out for each identified user.

3. Method according to either of Claims 1 and 2, **characterized in that** the parameters associated with the context in which the motor vehicle is being used are chosen from among any or all of:
- the identification of the user,
- the monitoring record of the itineraries followed by the user, the positions of the vehicle and the periods for which the vehicle is parked,
- the monitoring record of the user's actions on an on-board multimedia system,
- the time slot,
- working days or weekend,
- the number of occupants of the vehicle,
- the monitoring record of the driving,
- the monitoring record of the information on the vehicle dashboard,
- the monitoring record of the events in the on-board multimedia system.

4. Method according to either of Claims 2 and 3, **characterized in that** the step of compiling a list of suggested actions comprises the following sub-steps:
- generating at least one suggested action on the basis of the stored parameters,
- recording the generated suggestion in an electronic storage device (18) containing the list of suggested actions.

5. Method according to Claim 4, **characterized in that** generating a suggestion comprises defining a triggering event and a corresponding action associated with this suggested action.

6. Method according to Claim 5, **characterized in that** generating a suggestion comprises defining a name and/or a reaction of the human-machine interface and/or graphic elements associated with this suggested action.

7. Method according to either of Claims 5 and 6, **characterized in that** the selection of a given suggested action from among the list of suggested actions is activated if the context in which the vehicle is being used corresponds to the triggering event associated with this suggested action.

8. Method according to any of Claims 1 to 7, **characterized in that** the list of suggested actions comprises suggested actions of the "communication" and/or "navigation" and/or "multimedia" and/or "system" category.

9. Method according to Claim 8, **characterized in that** the suggested actions of the "communication" category comprise any or all of the following suggestions:
- play an SMS message when a new SMS is received,
- call back a caller who has made a missed call,
- display a task when a reminder of this task appears,
- open a record associated with a friend of the user if this friend is in the geographical proximity of the vehicle.

10. Method according to either of Claims 8 and 9, **characterized in that** the suggested actions of the "navigation" category comprise any or all of the following suggestions:
- activate a "tourist" mode if the vehicle is traveling through an unfamiliar area,
- provide guidance toward a special location if this location is nearby,
- display rest and/or refreshment areas if the period of travel exceeds a predetermined value,
- display variant itineraries in case of congestion.

11. Method according to any of Claims 8 to 10, **characterized in that** the suggested actions of the "multimedia" category comprise any or all of the following suggestions:
- play a suggested musical selection if there is a similarity with the user's habits and/or if a suggestion to play is made by an occupant other than the user and/or if there is a recommendation by a social network linked to the user and/or if there is a connection to a nomadic element if at least two occupants are present,
- play a musical game if at least three occupants are present,
- play unplayed episodes of a podcast to which the user subscribes,
- play a radio broadcasting station which is suggested according to the user's listening habits and/or according to the location of the vehicle.

12. Method according to any of Claims 8 to 11, **characterized in that** the suggested actions of the "system" category comprise any or all of the following suggestions:
- discover a "widget" if it corresponds to the recorded interests of the user and/or in case of similarity to widgets already downloaded,
- record personal telephone numbers and/or email addresses if a telephone and/or an internet connection is detected,
- offer assistance or explanations regarding functions or gestures having a low or zero level of use or execution.

13. Multimedia system installed on board a motor vehicle to assist the user of the motor vehicle, **characterized in that** it comprises a control unit which executes a method according to any of Claims 1 to 12, the multimedia system comprising a human-machine interface (21) for transmitting to the user the suggested actions received from the control unit.

14. Multimedia system according to Claim 13, **characterized in that** the control unit comprises:
- a module (17) for compiling suggested actions, which generates probable suggested actions and records them in a list of suggested actions contained in an electronic storage device (18),
- and a selection module (20) adapted to select at least one suggested action from among the list of suggested actions, if the context in which the vehicle is being used corresponds to the triggering event associated with this suggested action, and to transmit it to the human-machine interface.

15. Motor vehicle fitted with a multimedia system according to either of Claims 13 and 14.

16. Motor vehicle according to Claim 15, **characterized in that** it comprises devices (12) adapted to generate parameters associated with the context in which the motor vehicle is being used.

17. Data medium which is readable by a control unit and on which is recorded a computer program comprising computer program code means for executing the steps or sub-steps of a method of assistance according to any of Claims 1 to 12.
